# EUROPEAN PATENT SPECIFICATION

(11) **EP 4 025 775 B1**
(45) Date of publication and mention of the grant of the patent: **04.12.2024**
(21) Application number: 20860131.0
(22) Date of filing: 28.08.2020
(51) Int. Cl.: F02M 65/00, F02M 57/02, F02M 21/02

(54) **METHOD FOR TESTING A VALVE BODY OF AN INJECTOR VALVE AND METHOD FOR TESTING AN INJECTOR VALVE**
VERFAHREN ZUM PRÜFEN EINES VENTILKÖRPERS EINES EINSPRITZVENTILS UND VERFAHREN ZUM PRÜFEN EINES EINSPRITZVENTILS
PROCÉDÉ D'ESSAI D'UN CORPS DE SOUPAPE D'UNE SOUPAPE D'INJECTEUR ET PROCÉDÉ D'ESSAI D'UNE SOUPAPE D'INJECTEUR

(30) Priority: 06.09.2019 DK PA201901059
(43) Date of publication of application: 13.07.2022
(73) Proprietor: IOP Marine A/S, 2605 Brøndby (DK)
(72) Inventor: SOWINSKI, Grzegorz, 2000 Frederiksberg (DK)
(74) Representative: Nordic Patent Service A/S
(86) International application number: PCT/DK2020/050241
(87) International publication number: WO 2021/043380

(56) References cited:
- WO-A1-2013/068090
- WO-A1-2016/155746
- WO-A1-2016/155746
- GB-A- 2 086 984
- KR-A- 20180 056 020
- US-A1- 2008 264 157
- US-B1- 6 557 402

## Description

### TECHNICAL FIELD

The disclosure relates to a method for testing a valve body of the injector valve.

### BACKGROUND

WO 2016/155746 discloses a method for testing an injector valve for liquid gas such as methanol. The injector valve may be used for a two-stroke combustion engine. The injector valve is supplied with sealing oil and control oil for controlling the supply of liquid gas. The disclosed injector valve holds a plunger piston chamber for forming a compression chamber, a suction valve with a suction piston and a nozzle valve with a nozzle piston, one or more nozzle openings, and a control oil channel, wherein the fuel fluid channels provide a fluid connection from the plunger piston chamber to the nozzle openings when the suction valve is open by a pressure on the suction piston provided by a fluid pressure in the plunger piston chamber and when the nozzle valve is open by a pressure on the nozzle piston provided by a control oil pressure supplied via the control oil channel. For the test disclosed in WO 2016/155746, the injector valve is placed in a holder and the top cover is removed and substituted with a connecting piece and the pressure of the control oil is increased until the opening pressure for the nozzle valve is reached and the injector valve sprays oil from the nozzle openings into a spray chamber. As a result, the opening pressure of the nozzle valve can be checked. However, there is no disclosure of a leakage test of the suction valve.

A new injector valve for methanol for a two-stroke combustion engine has been developed by MAN Diesel & Turbo. The injector valve is supplied with sealing oil and control oil for controlling the supply of liquid gas. Leaks if any could be very dangerous.

Thus, there is a need for an improved method for testing an injector valve for leaks, and there is also a need for an improved working test of an injector valve.

### SUMMARY

It is an object of the present disclosure to provide an improved method for testing an injector valve for valve leaks.

This object is achieved in accordance with the invention defined in claim 1 by providing a method of testing a valve body of an injector valve for a combustion engine, which valve body holds
a plunger piston chamber for forming a compression chamber, a suction valve with a suction piston, one or more fuel fluid channels, a nozzle valve with a nozzle piston, one or more nozzle openings, and a control oil channel, wherein the fuel fluid channels provide a fluid connection from the plunger piston chamber to the nozzle openings when the suction valve is open by a pressure on the suction piston provided by a fluid pressure in the plunger piston chamber and when the nozzle valve is open by a pressure on the nozzle piston provided by a control oil pressure supplied via the control oil channel; said method comprising:
supplying control oil to the nozzle piston via the control oil channel at a first control oil pressure, said first control oil pressure being higher than or equal to a predetermined control oil opening pressure for which the nozzle valve is configured to open;
supplying a test gas to the suction piston via the plunger piston chamber at a first test gas pressure being lower than a predetermined test gas opening pressure for which the suction valve is configured to open; and
checking whether any of the supplied test gas is reaching out through the nozzle openings.

The supplied test gas may reach via the suction valve, the fuel fluid channels, the nozzle valve and out through the nozzle openings.

In a possible implementation form, a flexible hose is connected to the nozzle openings and further connected to a separate container with liquid, whereby any test gas reaching through the nozzle openings into the flexible hose is observed as bubbles in the liquid of the container. The liquid may be water.

If any gas bubbles are observed in in the separate container, the suction valve is not completely tight. If no bubbles are observed, the suction valve is tight.

In a possible implementation form, the control oil is supplied at a first control oil pressure in the range of 280-320 bar, such as about 300 bar.

In a possible implementation form, the test gas is supplied at a first test gas pressure below 30 bar.

In a possible implementation form, the method further comprises:
supplying test gas to the suction piston via the plunger piston chamber at a second test gas pressure being above or equal to the predetermined test gas opening pressure required for opening the suction valve; and
checking the amount of test reaching out through the nozzle openings.

In a possible implementation form, the step of checking the amount of test gas reaching out through the nozzle openings comprises checking the amount of test gas bubbles in the liquid of the separate container.

If an increased amount of test gas bubbles is observed in when compared to the amount of test gas bubbles observed at the first test gas pressure, the suction valve is open as required.

In a possible implementation form, the test gas being supplied at the second test gas pressure is supplied at a pressure being above 30 bar, such as not below 40 bar, such as not below 50 bar, such as about 100 bar.

In a possible implementation form, the method further comprises:
avoiding supply of control oil or supplying control oil at a pressure being below the predetermined control oil opening pressure to ensure that the nozzle piston is in a position in which the nozzle valve is closed;
supplying test gas to the suction piston via the plunger piston chamber at a test gas pressure being above or equal to the predetermined test gas opening pressure required for opening the suction valve; and
checking whether any test gas is reaching out through the nozzle openings or not.

In a possible implementation form, the step of checking whether any test gas reaches out through the nozzle openings or not comprises checking whether there are any test gas bubbles or not in the liquid of the separate container.

In a possible implementation form, the test gas being supplied at a pressure being above or equal to the predetermined test gas opening pressure required for opening the suction valve is supplied at a pressure being above 30 bar, such as not below 40 bar, such as not below 50 bar, such as about 100 bar.

If any test gas bubbles are observed, the nozzle valve is not completely tight. If no bubbles are observed, the nozzle valve is tight.

In a possible implementation form, a connecting piece is provided, said connecting piece having a top part with a first fluid inlet port and a second fluid inlet port and further having a dummy thrust piece holding a test fluid channel in fluid connection with the second fluid inlet port, and wherein before the steps of supplying control oil and test gas, the method comprises
connecting the connecting piece to the valve body by inserting the dummy thrust piece into the plunger piston chamber with the test fluid channel reaching through the plunger piston chamber to the suction valve, and connecting the first fluid inlet port to the control oil channel; and wherein
the control oil is supplied to the first fluid inlet port to reach the nozzle piston via the control oil channel, and the test gas is supplied to the second fluid inlet port and flowing through the test fluid channel within the plunger piston chamber to reach the suction piston.

In a possible implementation form, the injector valve further comprises:
a top cover with a control oil inlet port, a cover chamber in fluid connection with the control oil inlet port via one more cover fluid channels; and
a plunger piston with a plunger chamber, a plunger valve and one or more plunger fluid channels, said plunger piston being controlled by control oil supplied to the cover chamber from the control oil inlet port; and wherein before the step of connecting the connecting piece to the valve body, the top cover and the plunger piston are connected to the valve body with
the valve body holding the plunger piston chamber forming a compression chamber together with the plunger piston, which is inserted into the plunger piston chamber, said compression chamber being in fluid connection with the plunger chamber via the plunger fluid channels when the plunger valve is open, and with
the control oil channel being in fluid connection with the control oil inlet port via the cover chamber and the cover fluid channels for supply of control oil.

In a possible implementation form, the top cover further holds a sealing oil inlet port, and the valve body holds a sealing oil channel and a nozzle valve chamber holding the nozzle piston, which sealing oil channel is in fluid connection with the sealing oil inlet port, in fluid connection with the plunger piston chamber for sealing the plunger piston, and in fluid connection with the nozzle valve chamber for sealing the nozzle piston.

In a possible implementation form, the valve body further comprises:
a first fuel inlet port in fluid connection with the plunger chamber via a first fuel inlet channel whereby a pressure provided by a fluid supplied from the first fuel inlet port to the plunger chamber opens the plunger valve; and
a second fuel inlet port in fluid connection with the compression chamber via a second fuel inlet channel.

In a possible implementation form, then before the step of connecting the connecting piece to the valve body, the method comprises disconnecting the top cover and the plunger piston from the valve body.

In a possible implementation form of the first aspect, the test gas in a non-burnable gas, such as Nitrogen.

The foregoing and other objects are achieved by the features of the independent claims. Further implementation forms are apparent from the dependent claims, the description and the figures. These and other aspects of the invention will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 a perspective view of the assembled injector valve holding a valve body with a plunger piston and top cover according to an example embodiment;
Fig. 2 illustrates the assembled injector valve of Fig. 1 when placed in a valve holder and a spray chamber according to an example embodiment;
Fig. 3a shows a top cover of the injector valve of Fig. 1 according to an example embodiment;
Fig. 3b shows a plunger piston of the injector valve of Fig. 1 according to an example embodiment;
Fig. 4 illustrates a connecting piece to be placed in the injector valve of Fig. 1 according to an example embodiment;
Fig. 5 illustrates the injector valve placed in a valve holder and a spray chamber with the top cover and plunger piston being replaced by the connecting piece according to an example embodiment;
Fig. 6 is a longitudinal sectional view of the injector valve with the connecting piece placed in a valve holder according to an example embodiment;
Fig. 7 is a longitudinal sectional view of the injector valve of Fig. 1, with the sectional view taken at a distant to a centre axis of the valve, according to an example embodiment;
Fig. 8a is a longitudinal sectional view of a lower part of the injector valve according to an example embodiment;
Fig. 8b is an amplified view of a detail in Fig. 8b according to an example embodiment;
Fig. 9 is an amplified view of a lower part of the sectional view of Fig. 8a according to an example embodiment;
Fig. 10 is a longitudinal sectional view of a lower part of the injector valve with the connecting piece when turned an angle when compared to the longitudinal sectional view of Fig. 8a according to an example embodiment;
Fig. 11 is an amplified view of a lower part of the sectional view of Fig. 10 according to an example embodiment;
Fig. 12 is an amplified longitudinal sectional view showing a suction valve of the injector valve in a closed position according to an example embodiment;
Fig. 13 is an amplified longitudinal sectional view showing the suction valve of Fig. 12 in an open position according to an example embodiment;
Fig. 14a is a longitudinal sectional view of the assembled injector valve of Fig. 1 according to an example embodiment;
Fig. 14b is a longitudinal sectional view of the assembled injector valve of Fig. 14a when turned an angle according to an example embodiment;
Fig. 15 is an amplified longitudinal sectional view of a lower part of the plunger piston of Fig. 3b when positioned in the assembled injector valve of Fig. 1 according to an example embodiment;
Fig. 16 is a cross-sectional view of the top cover of Fig. 3a according to an example embodiment;
Fig. 17 is an amplified longitudinal sectional view of an upper part of the plunger piston of Fig. 3b when positioned in the assembled injector valve of Fig. 1 according to an example embodiment;
Fig. 18 is a longitudinal sectional view of the assembled injector valve of Fig. 2 placed in the valve holder and a spray chamber according to an example embodiment;
Fig. 19a is an amplified longitudinal sectional view of a detail of Fig. 18 showing a first fuel inlet channel providing a fluid connection to a plunger chamber in the plunger piston of Fig. 3b according to an example embodiment;
Fig. 19b is an amplified longitudinal sectional view of a detail of Fig. 18 turned an angle when compared to Fig. 19a showing a second fuel inlet channel providing a fluid connection to a plunger piston chamber below the plunger piston according to an example embodiment;
Fig. 20 is a diagram of a test system with lines for supply of control oil and test gas for testing the injector valve of Fig. 1 with the top cover and plunger piston being replaced by the connecting piece of Fig. 4 according to an example embodiment; and
Fig. 21 is a diagram of a test system with lines for supply of sealing oil, fuel inlet and control oil or purge oil for testing the assembled injector valve of Fig. 1, which test of the assembled injector valve of Fig. 1 is not part of the invention and which is present for illustration purposes only.

### LIST OF REFERENCE NUMBERS FOR THE DRAWINGS

| | |
|---|---|
| Injector valve | 10 |
| Top cover | 11 |
| Plunge oil inlet port | 12a |
| Control oil inlet port | 13 |
| Sealing oil inlet port | 14 |
| Cover chamber | 12b |
| Cover fluid channels | 15a, 15b |
| Plunger piston | 16 |
| Plunger chamber | 17 |
| Plunger valve | 18 |
| Plunger valve piston | 19 |
| Plunger valve spring | 20 |
| Plunger fluid channels | 21 |
| Valve body | 22 |
| Plunger piston chamber | 23 |
| Plunger piston sealing chamber | 24 |
| Compression chamber | 25 |
| First fuel inlet port | 26 |
| First fuel inlet channels | 27a, 27b |
| Second fuel inlet port | 28 |
| Second fuel inlet channel | 29 |
| Control oil channel | 30 |
| Sealing oil channel | 31 |
| Suction valve | 32 |
| Suction valve fuel oil channel | 33 |
| Suction valve chamber | 34 |
| Suction piston | 35 |
| Suction piston spring | 36 |
| Fuel fluid channels | 37 |
| Nozzle valve | 38 |
| Nozzle valve chamber | 39 |
| Nozzle valve spring | 40 |
| Nozzle piston | 41 |
| Nozzle piston oil channel | 42 |
| Nozzle piston sealing chamber | 43 |
| Nozzle piston fuel oil chamber | 44 |
| Nozzle | 45 |
| Nozzle openings | 46 |
| Valve holder | 1 |
| Top plate | 2a |
| Lower plate | 2b |
| Upper nuts | 3a |
| Lower nuts | 3b |
| Fuel inlet | 4a |
| Leak outlet | 4b |
| Spray chamber | 5a |
| Connecting piece | 6 |
| Top part | 7 |
| Top part first fluid inlet port | 8a |
| Top part second fluid inlet port | 8b |
| Dummy thrust piece | 9a |
| Thrust piece fluid channel | 9b |
| Connecting piece nuts | 8c |
| Flexible hose | 5b |
| Separate container | 5c |
| Non-return valve | 5d |
| Test system | 100 |
| Gas inlet | 100a |
| Air inlet | 100b |
| Gas outlet | 100c |
| Control oil outlet | 100d |
| Sealing oil outlet | 100e |
| Fuel oil outlet | 100f |
| Control oil directional valve | 101 |
| Control oil pressure relief valve | 102 |
| Control oil stop valve | 103 |
| Control oil pressure safety valve | 104 |
| Hydraulic accumulator | 105 |
| Control oil pressure gauge | 106 |
| Control oil air driven pump | 107 |
| Control oil pressure control valve | 108 |
| Oil tank | 109 |
| Gas stop valve | 110 |
| Gas pressure relief valve | 111 |
| Gas pressure control valve | 112 |
| Gas pressure gauge | 113 |
| Sealing oil pressure relief valve | 114 |
| Sealing oil pressure control valve | 115 |
| Sealing oil pressure safety valve | 116 |
| Sealing oil pressure gauge | 117 |
| Sealing oil air driven pump | 118 |
| Fuel oil pressure relief valve | 119 |
| Fuel oil pressure control valve | 120 |
| Fuel oil pressure safety valve | 121 |
| Fuel oil pressure gauge | 122 |
| Fuel oil air driven pump | 123 |

### DETAILED DESCRIPTION

An injector valve according to a preferred embodiment is designed by MAN Diesel & Turbo for a two-stroke combustion engine. The engine is a duel fuel engine, which can run on standard heavy fuel oil or on a liquefied petroleum gas, LGP, such as propane.

The injector valve may be used as a fuel booster injection valve for the liquefied petroleum gas, LGP, and may be designed for performing two functions: to pressurize or boost the LPG to the desired injection pressure, and to ensure the correct timing and duration of the LPG injection.

During normal operation, the injector valve is supplied with sealing oil, plunge oil, control oil, and liquid petroleum gas, LPG, as fuel. Sealing oil is to prevent internal leak of liquid gas from entering unintended areas of the injector valve. Plunge oil is to pressurize the fuel, LPG. Control oil is to control the timing of opening the injector valve for delivering compressed fuel gas to the combustion chamber. Liquid fuel is supplied to the injector valve constantly.

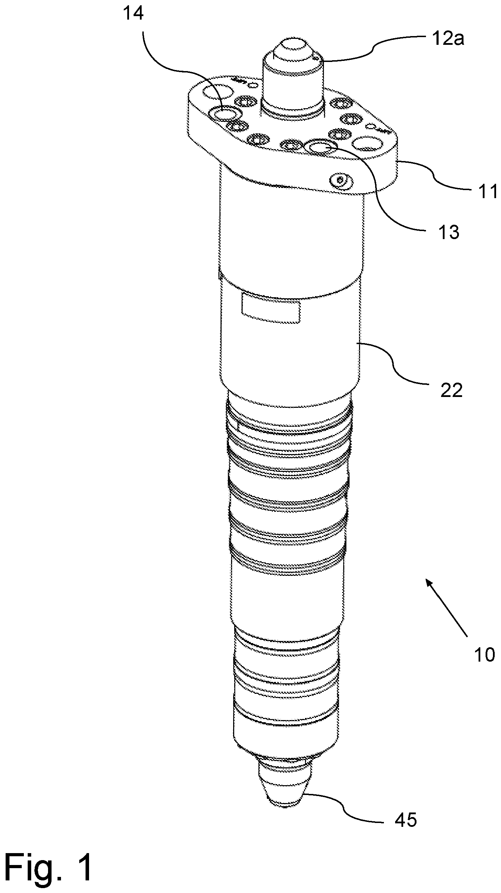

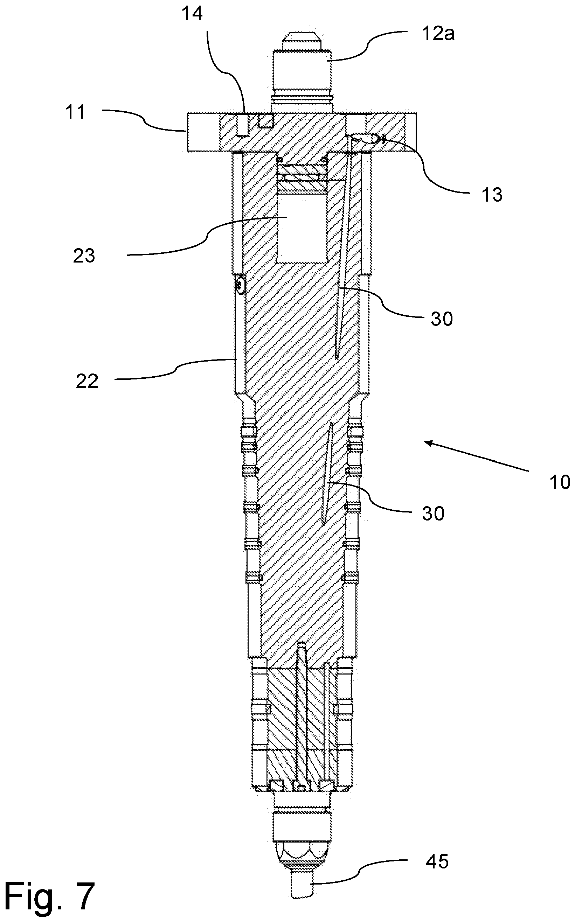

An embodiment of the injector valve 10, an embodiment of a valve holder 1 and a connecting piece 6 used for testing the injector valve are described in the following with reference to Figs. 1 to 19.

The injector valve 10 holds a top cover 11, see Figs. 1, 7, 14a and 14b, a plunger piston 16, and a valve body 22, and when the injector valve is assembled, the plunger piston 16 is inserted into a plunger piston chamber 23 hold by the valve body 22, with the top cover 11 secured on top of the valve body 22, leaving the plunger piston 16 to be moved within the plunger piston chamber 23.

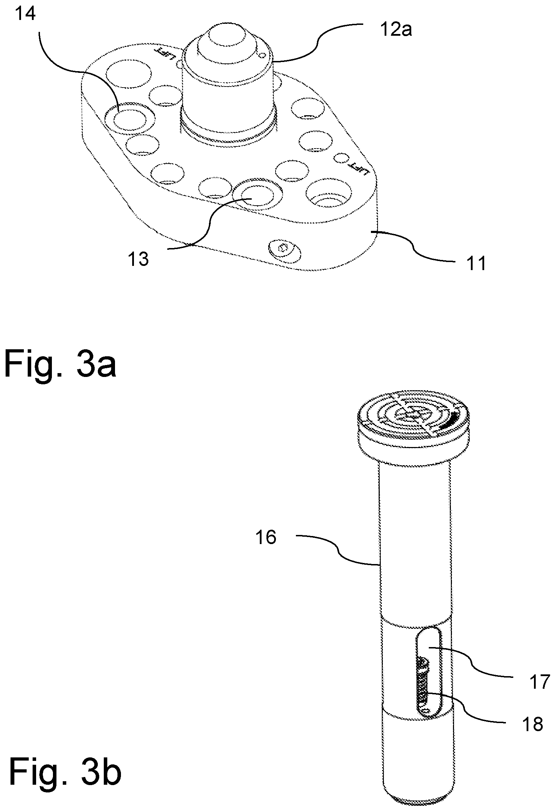

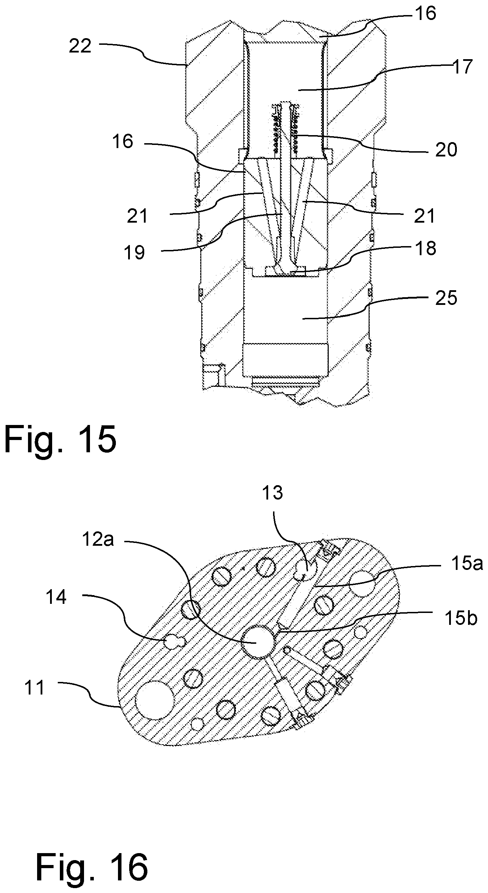

The top cover 11 holds a plunge oil inlet port 12a, a control oil inlet port 13 and a sealing oil inlet port 14, see Fig. 3a. The top cover 11 further holds a cover chamber 12b in direct fluid connection with the plunge oil inlet part 12a, and in fluid connection with the control oil inlet port 13 via two cover fluid channels 15a, 15b, see Fig. 16, which is a cross-sectional cut through view of the top cover 11 to illustrate the channels 15a and 15 providing the fluid connection between the plunge oil inlet port 12a and the control oil inlet port 13.

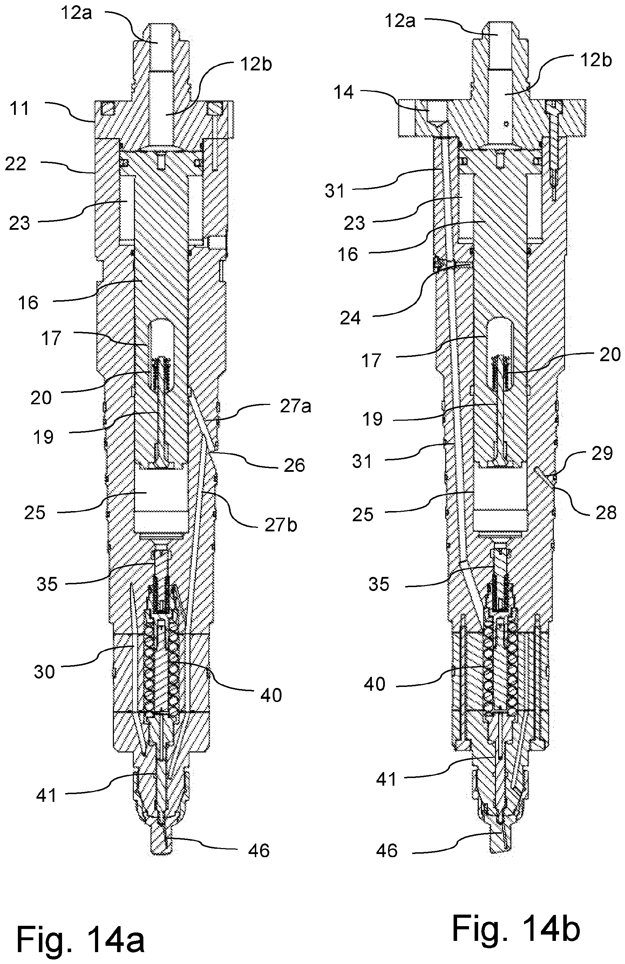

The plunger piston 16 holds a plunger chamber 17, a plunger valve 18 formed by a plunger valve piston 19 and a plunger valve spring 20, see Figs. 3b, 14a and 14b, and plunger fluid channels 21, see Fig. 15, where the plunger fluid channels 21 provide a fluid connection from the plunger chamber 17 to the bottom of the plunger piston 16 when the plunger valve 18 is open by the plunger valve piston 19 being pressed downwards. When the plunger piston 16 is inserted into the plunger piston chamber 23, a compression chamber 25 is formed in the valve body 22 below the bottom of the plunger piston 16, where the compression chamber 25 is in fluid connection with the plunger chamber 17 via the plunger fluid channels 21 when the plunger valve 18 is open. The downwards movement of the plunger piston 16 may be controlled by oil supplied to the cover chamber 12b from the plunge oil inlet port 12a.

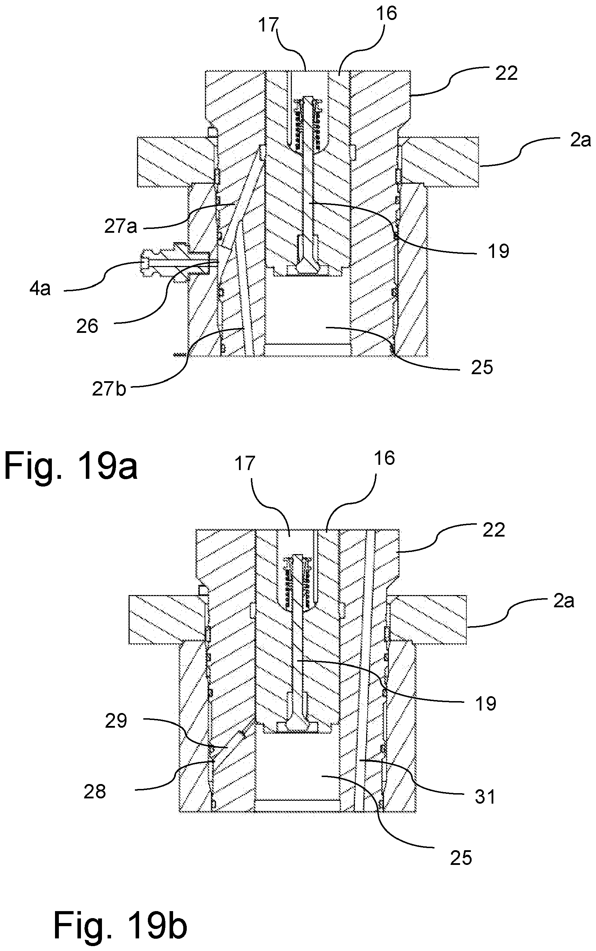

The valve body 22 holds a first fuel inlet port 26 in fluid connection with the plunger chamber 17 via a first fuel inlet channel 27a, see Figs. 14a and 19a, whereby a pressure provided by a fuel fluid supplied from the first fuel inlet port 26 to the plunger chamber 17 may open the plunger valve 18, whereby the fuel fluid may flow form the plunger chamber into the compression chamber 25 via the plunger fluid channels 21. The valve body also holds a second fuel inlet port 28 in direct fluid connection with the compression chamber 25 via a second fuel inlet channel 29, see Figs. 14b and 19b.

The plunger chamber 17 and the part of the first fuel inlet channel 27a feeding the fuel fluid to the plunger chamber 17 are configured so as to provide the fuel fluid connection between the first fuel inlet port 26 and the plunger chamber 17 at all positions of the plunger piston 16. The compression chamber 25 and the second fuel inlet channel 29 are configured to provide the fuel fluid connection between the second fuel inlet port 28 and the compression chamber 25 when the plunger piston 16 is in an uppermost position when no control oil pressure is supplied to the plunger piston 16 and further configured to close the fuel fluid connection between the second fuel inlet port 28 and the compression chamber 25 when the plunge piston 16 is moved downwards by an oil pressure supplied via the cover chamber 12b.

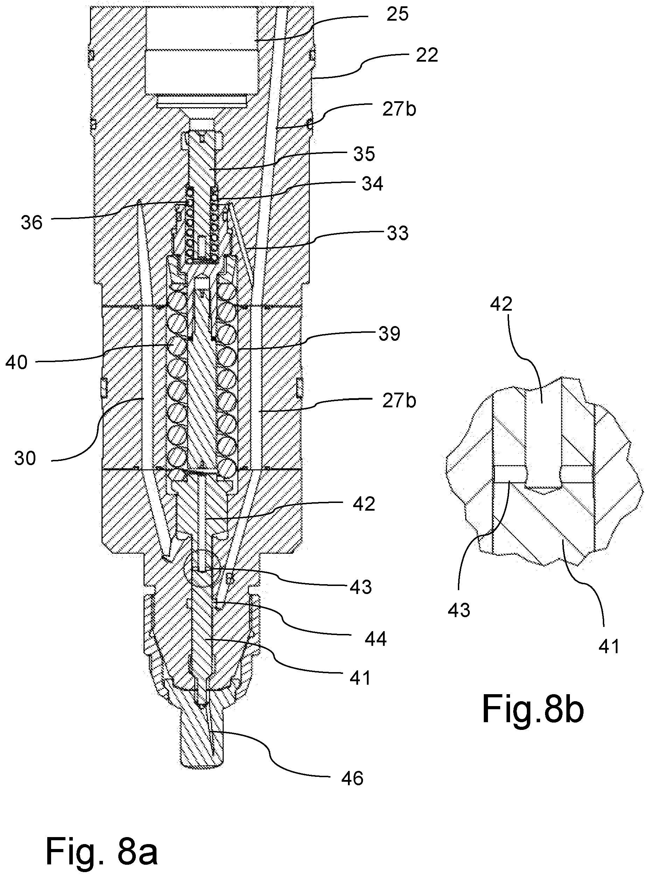

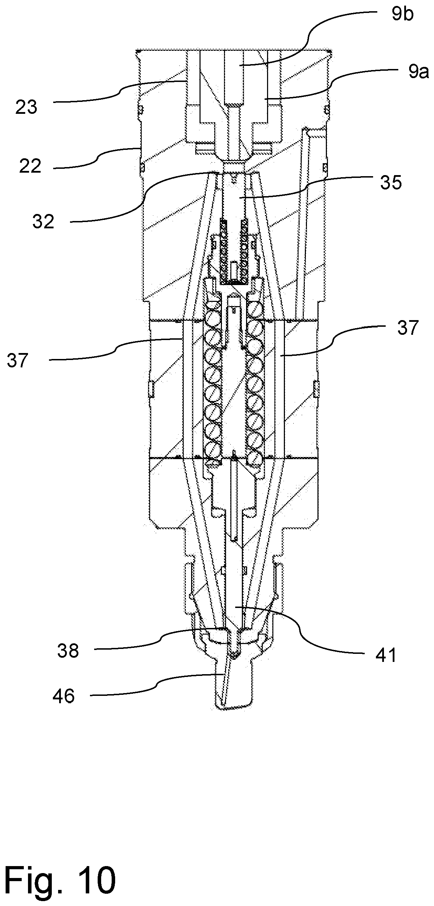

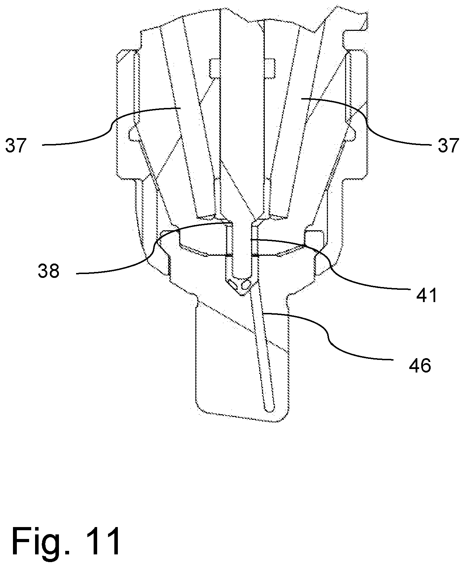

The valve body 22 holds a suction valve chamber 34 with a suction valve 32 positioned at the bottom of the compression chamber 25, see Fig. 8a, where the suction valve 32 includes a suction piston 35 and a suction piston spring 36. The valve body 22 also holds a nozzle valve chamber 39 with a nozzle valve 38 including a nozzle piston 41 and a nozzle piston spring 40. The bottom of the valve body 22 holds a nozzle 45 with nozzle openings 46 for output of the liquid fuel. A number of fuel fluid channels 37 are formed in the valve body 22, see Figs. 10 and 11, where the fuel fluid channels 37 are configured to provide a fluid connection from the compression chamber 25 to the nozzle openings 46 when the suction valve 32 is open by a pressure on the suction piston 35 provided by a fluid pressure in the compression chamber 25 and when the nozzle valve 38 is open by a pressure on the nozzle piston 41.

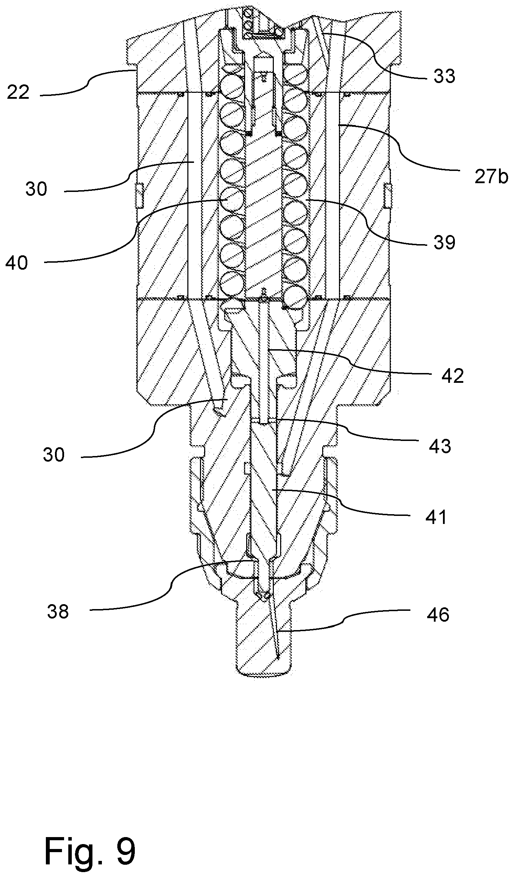

A control oil channel 30 is provided in the valve body 22, see Figs. 9 and 14a, where control oil is supplied to the control oil channel via the control oil inlet port 13 during normal operation. The control oil channel 30 is configured to provide a pressure for upwards movement of the nozzle piston 41 to thereby open the nozzle valve 38 and allowing the liquid fuel to escape through the nozzle openings 46.

Besides supplying fuel fluid to the plunger chamber 17, the first fuel inlet port 26 also supplies fuel fluid via first fuel inlet channel 27b to the suction valve chamber 34 via a suction valve fuel oil channel 33 to thereby assist the suction piston spring 36 in providing an upwards pressure on the suction piston 35, see Fig. 8a. The first fuel inlet port 26 further supplies fuel fluid via first fuel inlet channel 27b to a nozzle piston fuel oil chamber 44 surrounding the nozzle piston 41.

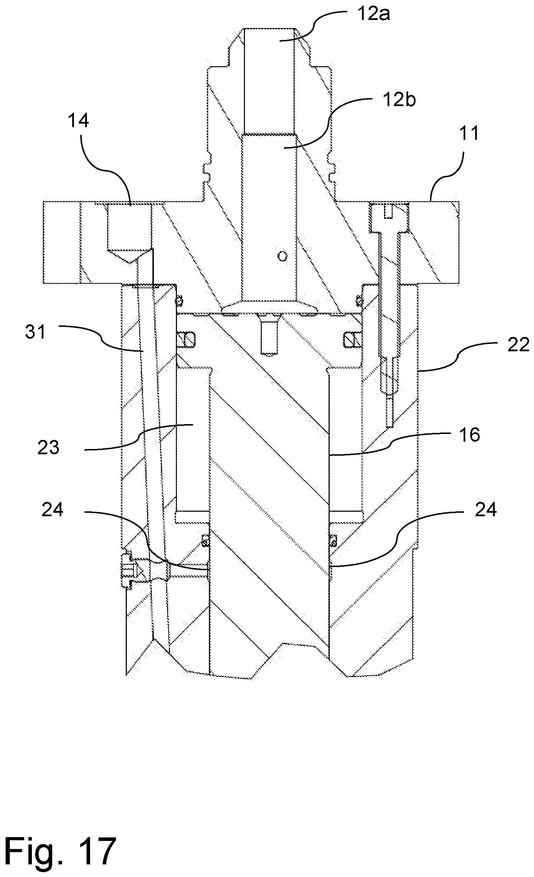

A sealing oil channel 31 is provided in the valve body 22, where sealing oil is supplied to the sealing oil channel via the sealing oil inlet port 14 during normal operation, see Fig. 14b. The sealing oil channel 31 is configured to deliver sealing oil to a plunger piston sealing chamber 24 for sealing the plunger piston 16 within the plunger piston chamber 23, see Figs. 14b and 17, and to deliver sealing oil to the nozzle valve chamber 39 holding the nozzle valve spring 40, see Fig. 14b. The nozzle piston 41 holds a nozzle piston oil channel 42, which is in fluid connection with a nozzle piston sealing chamber 43 surrounding the nozzle piston 41, see Figs. 8a and 8b. The sealing oil passes nozzle valve spring 40 and flows via the nozzle piston oil channel 42 into the nozzle piston sealing chamber 43 for sealing the nozzle piston 41 and to provide a downwards pressure on the nozzle piston 41.

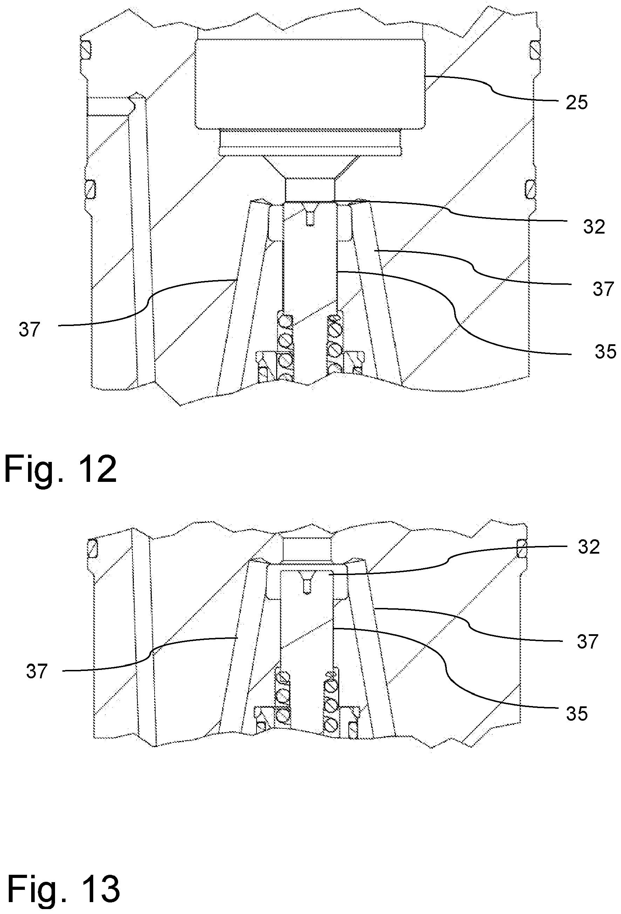

Fig. 12 is an amplified longitudinal sectional view showing the suction valve 32 of the injector valve 10 below the compression chamber 25, where the suction piston 35 is in an uppermost position closing the suction valve 32 and thereby closing for fluid flow from the compression chamber 25 and into the fuel fluid channels 37. Fig. 13 shows the situation where the suction piston 35 has been pressed downwards to thereby open the suction valve 32 for providing a fluid connection between the compression chamber 25 and the fuel fluid channels 37.

Fig. 11 is an amplified view of a lower part of the sectional view of Fig. 10 illustrating the situation for which the nozzle valve 38 is open with the nozzle piston 41 being pressed upwards to thereby provide a fluid connection between the fuel fluid channels 37 and the nozzle openings 46.

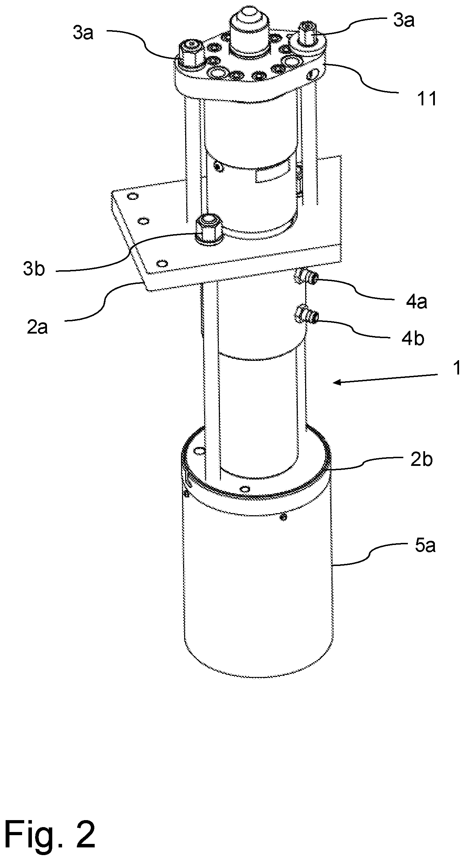

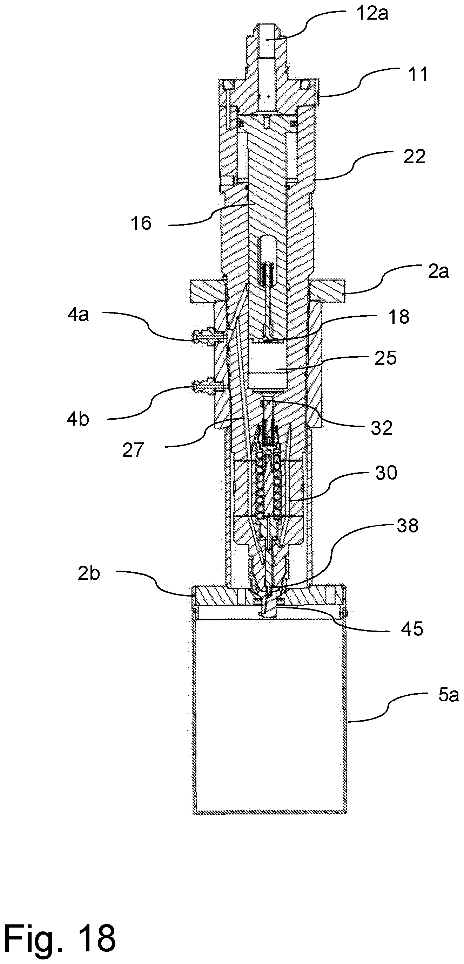

Figs. 2 and 18 illustrate the injector valve 10 of Fig. 1 when placed in the valve holder 1 for testing of the assembled injector valve 10, where the valve holder 1 is connected to a spray chamber 5a. The valve holder 1 is provided with a top plate 2a and a lower plate 2b, where the lower plate 2b is connected to the spray chamber 5a. The injector valve 10 is connected to the valve holder 1 by upper nuts 3a securing the top cover 11 to the top plate 2a, and by lower nuts securing the top plate 2a to the lower plate 2b. The valve holder 1 is provided with a fuel inlet 4a for inlet of fuel fluid to the first and second inlet ports 26 and 28 of the valve body 22, see Fig. 19a and 19b, and further provided with a leak outlet 4b for outlet of any oil being leaked from the injector valve 10 during a test. The upper part of the valve body 22 is inserted into an opening in the top plate 2a, while the nozzle 45 of the valve body 22 reaches through an opening in the lower plate 2b into the spray chamber 5a.

Fig. 19a shows how the valve body 22 is placed in the valve holder 1 with the first fuel inlet port 26 positioned in fluid connection with the fuel inlet 4a of the valve holder 1. The inside of the valve holder 1 and the outside of the valve body 22 are formed so as to provide a fuel inlet chamber surrounding the valve body 22 and being sealed by a lower sealing ring and an upper sealing ring. Both the first fuel inlet port 26 and the second fuel inlet port 28 reach into this fuel inlet chamber, whereby fuel oil can be supplied via the fuel inlet 4a to both the first and second fuel inlet ports 26 and 28.

In order to test whether the suction valve 32 and the nozzle valve 38 are tight, a connecting piece 6 is provided. For this kind of test, the top cover 11 and the plunger piston 16 are disconnected from the valve body 22, and the connecting piece 6 is inserted into the plunger piston chamber 23 of the valve body 22.

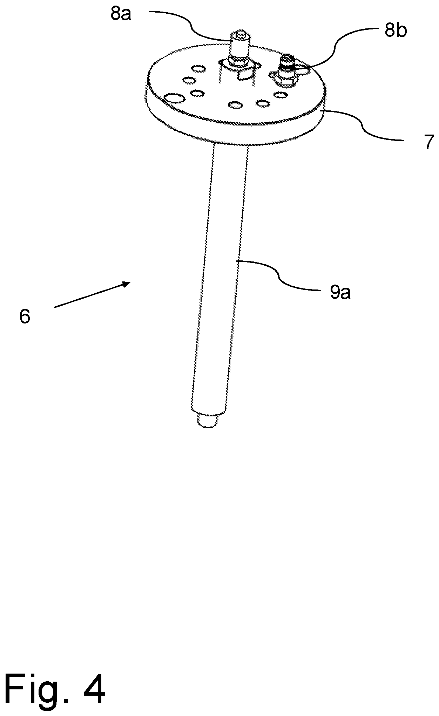

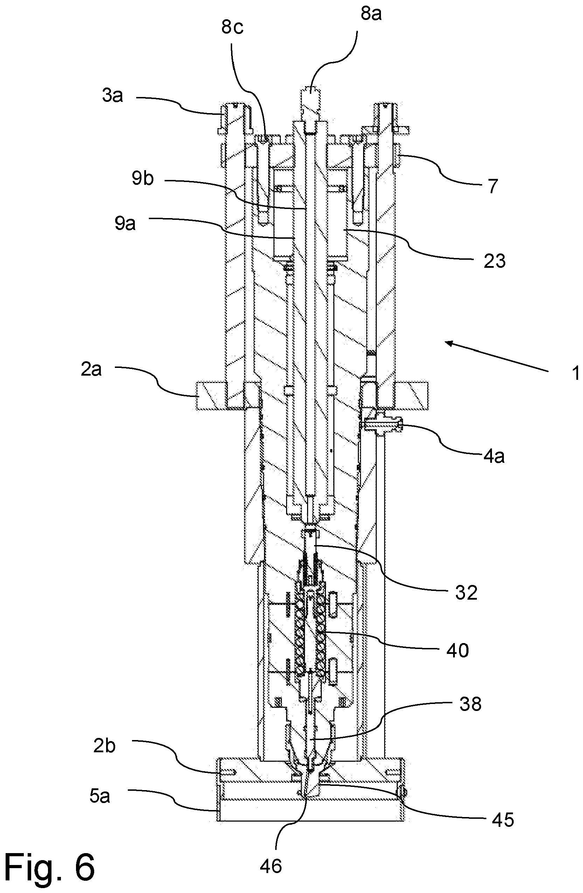

Fig. 4 illustrates an embodiment of such a connecting piece 6 to be placed in the valve body 22 of injector valve 10 of Fig. 1, when the top cover 11 and the plunger piston 16 are removed from the valve body 22. The connecting piece 6 holds a top part 7 with a top part first fluid inlet port 8a and a top part second fluid inlet port 8b and a dummy thrust piece 9a extending below the top part 7. The dummy thrust piece 9a holds a throughgoing thrust piece fluid channel 9b, see Fig. 6, which at the top is connected to the top part first fluid inlet port 8a for supply of fluid and which is open at the bottom for output of fluid.

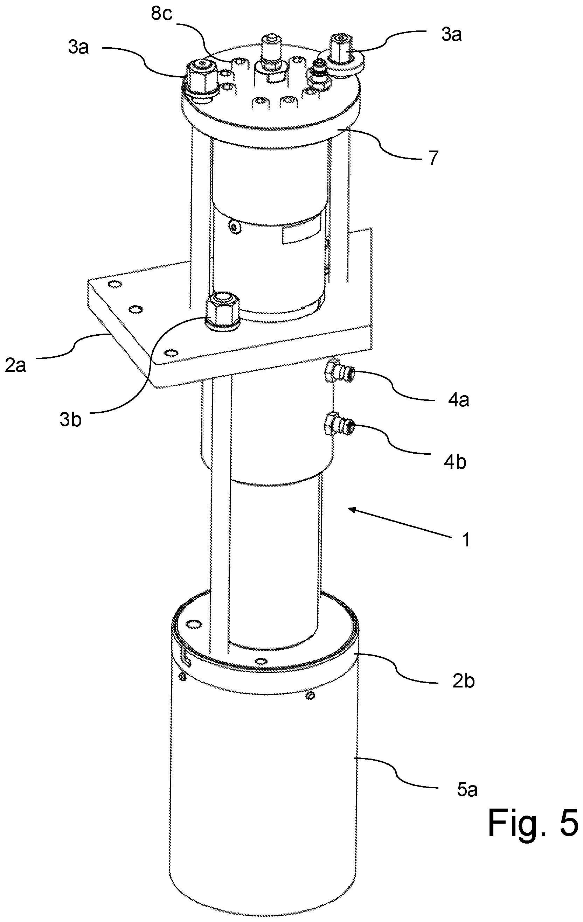

Fig. 5 illustrates the injector valve 10 placed in the valve holder 1 and the spray chamber 5a when the top cover 11 and plunger piston 16 are replaced by the connecting piece 6.

The top part 7 of the connecting piece 6 is secured to the valve body 22 by connecting piece nuts 8c. The valve holder 1 is provided with a top plate 2a and a lower plate 2b, where the lower plate 2b is connected to the spray chamber 5a. The valve body 22 and the connecting piece 6 is connected to the valve holder 1 by upper nuts 3a securing the top part 7 of the connecting piece 6 to the top plate 2a, and by lower nuts securing the top plate 2a to the lower plate 2b. The valve holder 1 may be provided with a fuel inlet 4a for inlet of fuel fluid to the first and second inlet ports 26 and 28 of the valve body 22, see Fig. 19a and 19b, and further provided with a leak outlet 4b for outlet of any oil being leaked from the injector valve 10 during a test. However, for testing the suction valve 32 and the nozzle valve 38, there is no fuel inlet to the valve body 22 through the fuel inlet 4a.

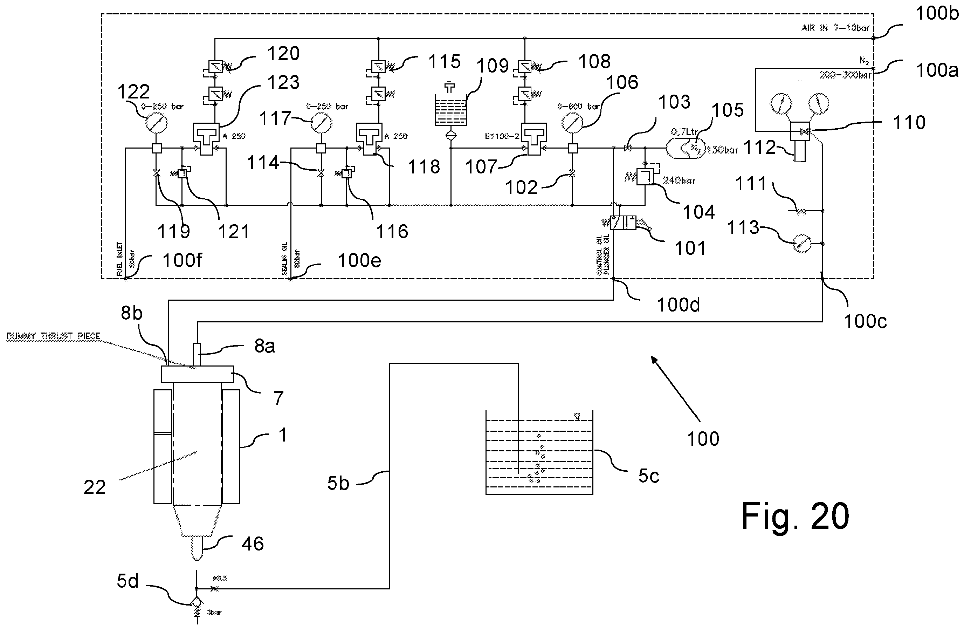

In a preferred embodiment for testing the suction valve 32 and the nozzle valve 38, the spray chamber 5a is replaced by a flexible hose 5b, which is in fluid connection with the nozzle openings 46 of the valve body 22 and further connected to a separate container 5c holding a liquid, such as water, see Fig. 20. The nozzle openings 46 are connected to a pipe having a pipe end connected to a non-return valve 5d, and a pipe outlet with a relatively small diameter, such as a diameter of 0,3 mm, being connected to the flexible hose 5b. The non-return valve 5d may be designed for opening at a pressure of 3 bar. Thus, if any test gas is output from the nozzle openings 46, this test gas can be observed as bubbles in the liquid of the separate container 5c, and if the pressure of the test gas being output from the nozzle openings 46 gets above the opening pressure of the non-return valve 5d, this valve 5d will open in order to avoid too much test gas spraying out through the liquid in the separate container 5c.

Fig. 6 is a longitudinal sectional view of the valve body 22 with the connecting piece 6 inserted into the plunger piston chamber 23 when placed in the valve holder 1, see also Fig. 5. The top part 7 of the connecting piece 6 is secured to the valve body 22 by connecting piece nuts 8c. The valve holder 1 is provided with a top plate 2a and a lower plate 2b, where the lower plate 2b is connected to the spray chamber 5a. The valve body 22 and the connecting piece 6 is connected to the valve holder 1 by upper nuts 3a securing the top part 7 of the connecting piece 6 to the top plate 2a, and by lower nuts securing the top plate 2a to the lower plate 2b. The valve holder 1 may be provided with a fuel inlet 4a, but for testing the suction valve 32 and the nozzle valve 38, there is no fuel inlet to the valve body 22 through the fuel inlet 4a.

Fig. 6 shows how the dummy thrust piece 9a is inserted into the plunger piston chamber 23 with the throughgoing thrust piece fluid channel 9b connected to the top part first fluid inlet port 8a for supply of fluid and with a bottom opening reaching through the bottom of the plunger piston chamber 23 in order to deliver a fluid pressure on the suction valve 32. Fig. 6 also shows the arrangement of the nozzle valve 38 with the nozzle valve spring, and the nozzle 45 going though an opening in the lower plate 2b of the valve holder 1 in order to allow a fluid output from the nozzle openings below the lower plate 2b. When both the suction valve 32 and the nozzle valve 38 are open, then a fluid delivered through the thrust piece fluid channel 9b will pass the suction valve 38, flow through the fuel fluid channels 37, see Fig. 10, and pass the nozzle valve 38 into the nozzle openings 46.

Fig. 20 is a diagram of a test system 100 with lines for supply of control oil 100d and test gas 100c for testing the suction valve 32 and the nozzle valve 38 of the valve body 22 of the injector valve 10 of Fig. 1, for which test the top cover 11 and the plunger piston 16 are replaced by the connecting piece 6 of Fig. 4.

For this test, the valve body 22 with the connecting piece 6 inserted into the plunger piston chamber 23 is placed in the valve holder 1, see also Figs. 5 and 6. A test gas in the form of Nitrogen is supplied from the system 100 via a gas outlet 100c to the first fluid inlet port 8a of the top part 7 of the connecting piece 6, and control oil is supplied via a control oil outlet 100d to the second fluid inlet port 8b of the top part 7. The nozzle openings 46 are connected to a pipe having a pipe end connected to the non-return valve 5d, where the pipe outlet placed before the non-return valve 5d is connected to the flexible hose 5b, which flexible hose 5b ends in the liquid of the separate chamber 5c, whereby test gas may flowing out through the nozzle openings can bae observed as bubbles in the liquid of the separate container 5c.

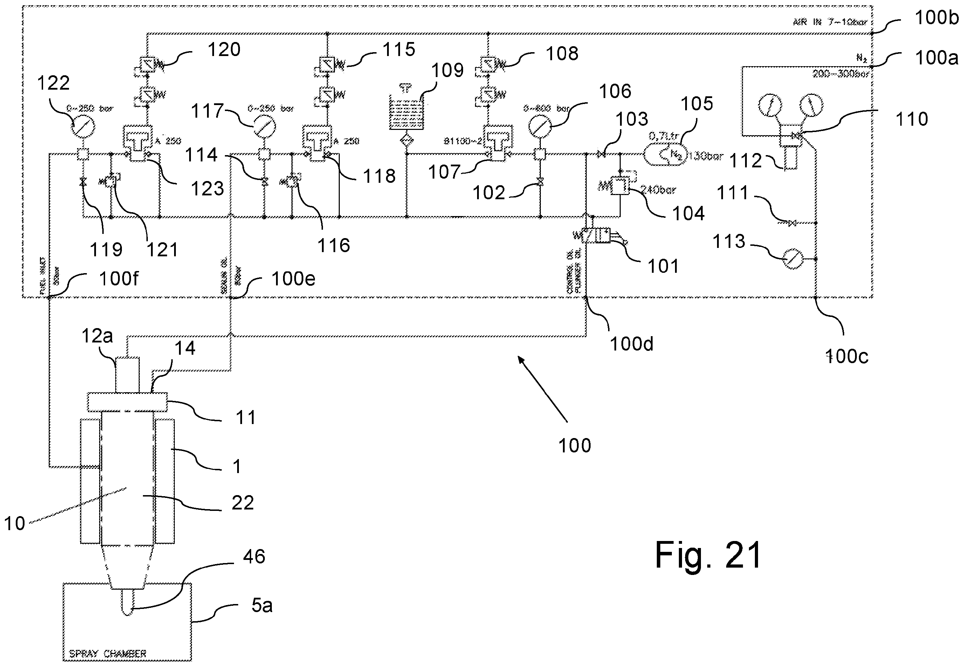

The test system 100 illustrated in Figs. 20 and 21 comprises an air inlet 100b for inlet of air at a pressure in the range of 7 - 10 bar, which pressurized air is used as input to three pressure control valves, a control oil pressure control valve 108, a sealing oil pressure control valve 115, and a fuel oil pressure control valve 120. A gas inlet 100a is provided for inlet of a test gas in the form of Nitrogen at a pressure in the range of 200-300 bar. The pressurized Nitrogen is supplied to a gas stop valve 110, with a gas pressure control valve 112 being provided for controlling the pressure of the gas being output from the gas stop valve 110 to the gas outlet 100c. A gas pressure relief valve 111 is connected to the gas line connection between the gas stop valve 110 and the gas outlet 100c and the gas pressure can be read from a gas pressure gauge 113.

In order to deliver a test fluid in the form of a hydraulic oil, which may be a mineral hydraulic oil with a viscosity of 10 centistokes (cSt), and oil thank 109 holding the hydraulic oil is provided. An outlet of the oil tank 109 is connected to three air driven pumps, a control oil air driven pump 107 being controlled by the control oil pressure control valve 108, a sealing oil air driven pump 118 being controlled by the sealing oil pressure control valve 115, and a fuel oil air driven pump 123 being controlled by the fuel oil pressure control valve 120. The oil pressure from the control oil air driven pump 107 can be read from a control oil pressure gauge 106, and the oil pressure from the control oil air driven pump 107 can be released by a control oil pressure relief valve 102, in which case released hydraulic oil will flow back to the oil tank 109.

A hydraulic accumulator 105 is provided, which accumulator 105 may be charged by opening or closing a control oil stop valve 103. A control oil pressure safety valve 104 is provided as a safety valve adjusted to a maximum working pressure of 240 bar for the hydraulic accumulator 105 in order to protect the accumulator 105 against too high pressure. The hydraulic accumulator 105 is a membrane type of accumulator. It has a chamber which is divided by a rubber membrane. On one side of the membrane is Nitrogen at a pressure of 120 bar, on the other side of the membrane is hydraulic oil supplied from the control oil air driven pump 107. While the pressure of hydraulic oil is 0 bar, then the whole volume of accumulator is filled with Nitrogen. While applying hydraulic oil at a pressure above 120 bar, then the Nitrogen will start compress, as the hydraulic oil will start filling the volume of hydraulic accumulator. The purpose of the accumulator 105 in the test system 100 is to accumulate hydraulic oil inside with a pressure. While releasing oil pressure it is possible to get a high peak oil flow output from the accumulator 105.

A control oil directional valve 101 is provided for opening or closing of control oil supply from the control oil air drive pump 107 and the hydraulic accumulator 105 to a control oil outlet 100d. While testing the assembled injector valve 10, it is necessary to provide control oil with a high flow in a short time through the control oil directional valve 101 to the control oil outlet 100d. The pump 107 is not able to provide the required control oil flow alone, wherefore the high peak control oil delivery from the hydraulic accumulator 105 is needed.

Sealing oil is provided from the sealing oil air driven pump 118 to a sealing oil outlet 100e, and the oil pressure from the sealing oil air driven pump 118 can be read from a sealing oil pressure gauge 117, while the oil pressure from the sealing oil air driven pump 118 can be released by a sealing oil pressure relief valve 114, in which case released hydraulic oil will flow back to the oil tank 109. A sealing oil pressure safety valve 116 is provided for protection of the sealing oil pressure gauge 117. The sealing oil pressure safety valve 116 is adjusted to a maximum working pressure of 150 bar at the output side of the sealing oil air driven pump 118. If the sealing oil pressure exceeds the 150 bar, the sealing oil safety valve 116 will open and hydraulic oil will flow back to the oil tank 109.

Fuel oil is provided from the fuel oil air driven pump 123 to a fuel oil outlet 100f, and the oil pressure from the fuel oil air driven pump 123 can be read from a fuel oil pressure gauge 122, while the oil pressure from the fuel oil air driven pump 123 can be released by a sealing oil pressure relief valve 119, in which case released hydraulic oil will flow back to the oil tank 109. A fuel oil pressure safety valve 121 is provided for protection of the fuel oil pressure gauge 122. The fuel oil pressure safety valve 121 is adjusted to a maximum working pressure of 150 bar at the output side of the fuel oil air driven pump 123. If the fuel oil pressure exceeds the 150 bar, the fuel oil safety valve 121 will open and hydraulic oil will flow back to the oil tank 109.

Fig. 21 shows the diagram of the test system 100 described above in connection with Fig. 20, which test system 100 holds the outlets for supply of sealing oil 100e, fuel oil 100f, and control oil or plunger oil 100d for a working test of the assembled injector valve 10 of Fig. 1.

For this working test, the assembled injector valve 10 holding the valve body 22, the plunger piston 16 and the top cover 11 is secured to the valve holder 1, as illustrated and described in connection with Fig. 2, where the valve holder 1 is connected to a spray chamber 5a with the nozzle 45 entering the spray chamber, whereby any hydraulic oil reaching out through the nozzle openings will be sprayed in the spray chamber 5a. The plunge oil inlet part 12a of the top cover 11 is supplied with hydraulic oil from the control oil outlet 100d, the sealing oil inlet port 14 of the top cover 11 is supplied with hydraulic oil from the sealing oil outlet 100e, and the fuel inlet 4a of the valve holder 1 is supplied with hydraulic oil from the fuel oil outlet 100f. The hydraulic oil supplied to the fuel inlet 4a is further supplied from the fuel inlet 4a to the first and second fuel inlet ports 26 and 28 of the valve body, as described in connection with Figs. 19a and 19b. For this test the control oil inlet port 13 is closed, and the supplied hydraulic oil will reach from the plunge oil inlet port 12a via the cover fluid channels 15a, 15b into the control oil channel 30.

### Test of suction valve 32

This test is performed using the test system 100 and test set-up as illustrated and described in connection with Fig. 20. The purpose of this test is to verify that the suction valve 32 is tight by having the suction piston 35 fully closing the inputs to the fuel fluid channels 37, see also Figs. 12 and 13:
1. Disconnect the top cover 11 and the plunger piston 16 from the valve body 22 and mount the connection piece 6 to the valve body 22. Then mount the valve body 22 with the connection piece 6 to the valve holder 1.
2. Connect the control oil outlet 100d to the second fluid inlet port 8b of the top part 7.
3. Close control oil pressure relief valve 102.
4. Close control oil stop valve 103.
5. Set control oil directional valve 101 to open position.
6. Open gas stop valve 110.
7. Increase control oil pressure up to 300 bar by control oil pressure control valve 118. By supplying control oil at a first control oil pressure of 300 bar, this first control oil pressure reaches the nozzle piston 41 through the control oil channel 30 and is higher than or equal to a predetermined control oil opening pressure for opening the nozzle valve 38 , whereby the nozzle valve 38 opens by lifting of the nozzle piston 41.
8. Connect the gas outlet 100c to the first fluid inlet port 8a of the top part 7 by use of a flexible gas hose to thereby provide a supply of test gas being Nitrogen gas to the suction piston 32 via the thrust piece fluid channel 9b hold by the dummy thrust piece 9a of the connection piece 6.
9. Close gas pressure relief valve 111.
10. Increase Nitrogen pressure up to 30 bar by gas pressure control valve 112, where the Nitrogen pressure is shown on the gas pressure gauge 113. By supplying Nitrogen at a first gas pressure of 30 bar, this first gas pressure is lower than a predetermined gas pressure needed for the open the suction valve 32 by a pressure on the suction piston 35, whereby the suction valve 32 is left closed.
11. Check if any Nitrogen bubbles are observed in the liquid of the separate chamber 5c.

If any gas bubbles are observed in in the liquid of the separate container 5c, the suction valve 32 is not completely tight. If no bubbles are observed, the suction valve 32 is tight.

The test of the suction valve 32 may further include the step of
12. Increase Nitrogen pressure up to 40-50 bar by gas pressure control valve 112, where the Nitrogen pressure is shown on the gas pressure gauge 113. By supplying Nitrogen at a second gas pressure above 30 bar, this second gas pressure is higher than the predetermined gas pressure needed for opening the suction valve 32 by a pressure on the suction piston 35, whereby the suction valve 32 shall be open.
13. Check if any Nitrogen bubbles are observed in the liquid of the separate chamber 5c.

If an increased amount of test gas bubbles is observed when compared to the amount of test gas bubbles observed at the first test gas pressure of 30 bar, the suction valve (32) is open as required.

### Test of nozzle valve 38

This test is performed using the test system 100 and test set-up as illustrated and described in connection with Fig. 20. The purpose of this test is to verify that the nozzle valve 38 is tight by having the nozzle piston 41 fully closing the outputs from the fuel fluid channels 37, see also Figs. 10 and 11:
14. Set control oil directional valve 101 to close position to thereby avoid any supply of control oil from the control oil outlet 100d to the to the second fluid inlet port 8b of the top cover 11. By no longer supplying control oil to the second fluid inlet port 8b, there is no control oil pressure for lifting the nozzle piston 41 and the nozzle valve 38 will be closed.
15. Turn counter-clockwise control oil pressure control valve 108 to deactivate the control oil air driven pump 107.
16. Open control oil pressure relief valve 102 to allow released hydraulic oil to flow back to the oil tank 109.
17. Open gas stop valve 110.
18. Increase Nitrogen pressure up to 100 bar by gas pressure control valve 112, where the Nitrogen pressure is shown on the gas pressure gauge 113. By supplying Nitrogen at gas pressure of 100 bar, this gas pressure is higher than the predetermined gas pressure needed for opening the suction valve 32 by a pressure on the suction piston 35, whereby the suction valve 32 shall be open with the inputs to the fuel fluid channels 37 being open.
19. Check if any Nitrogen bubbles are observed in the liquid of the separate chamber 5c.
20. Close gas stop valve 110.
21. Release Nitrogen pressure by gas pressure relief valve 111. Gas pressure gauge 113 shall indicate 0 bar.

If any test gas bubbles are observed a step 19, the nozzle valve 38 is not completely tight. If no bubbles are observed, the nozzle valve 38 is tight.

### Working test of assembled injector valve 10

This working test of the assembled injector valve 10 is not part of the invention and the working test is present for illustration purposes only.

This test is performed using the test system 100 and test set-up as illustrated and described in connection with Fig. 21. The purpose of this test is to verify that the assembled injector valve 10 is operating as supposed to in normal operation mode. The injector valve 10 shall be assembled completely for this test. For this test the control oil inlet port 13 is closed, and the supplied hydraulic oil will reach from the plunge oil inlet port 12a via the cover chamber 12b into the plunger piston chamber 23 for providing a pressure on the plunger piston 16, and from the plunge oil inlet port 12a via the cover fluid channels 15a, 15b into the control oil channel 30 for providing a pressure on the nozzle piston 41.
1. Dismount connection piece 6 from valve body 22.
2. Assembly of injector valve 10, insert plunger piston 16 into the valve body 22, and mount the top cover 11 to the valve body. The mount the injector valve 10 with the top cover 11 to the valve holder 1 with the spray chamber 5a.
3. Connect the control oil outlet 100d to the plunge oil inlet port 12a and connect the sealing oil outlet 100e to sealing oil inlet port 14.
4. Connect fuel oil outlet 100f to fuel inlet 4a.
5. Open control oil stop valve 103.
6. Close pressure relief valves 102, 114 and 119.
7. Increase fuel oil pressure up to 50 bar by fuel oil pressure control 120, where pressure can be read on fuel oil pressure gauge 122. By supplying fuel oil in the form of hydraulic oil at a first fuel inlet pressure of 50 bar to the fuel inlet 4a of the valve holder 1, the supplied fuel oil reaches the plunger chamber 17 via the first fuel inlet port 26 and the first fuel inlet channel 27a at this first fuel inlet pressure, which is higher than or equal to a predetermined fuel inlet pressure being high enough for opening the plunger valve 18, whereby the plunger valve 18 opens by pushing downwards the plunger valve piston 19 to allow the hydraulic oil to pass the plunger valve 18 into the compression chamber 25.
8. Increase sealing oil pressure up to 80 bar by sealing oil pressure control valve 115, where sealing oil pressure can be read on sealing oil pressure gauge 117. By supplying sealing oil at a first sealing oil pressure of 80 bar to the sealing oil inlet port 14, the supplied sealing oil reaches the plunger piston sealing chamber 24 and the nozzle valve chamber 39 via the sealing oil channel 31 at this first sealing oil pressure, which is higher than or equal to a predetermined sealing oil pressure required for sealing of the plunger piston 16 within the plunger piston chamber 23 and for sealing of the nozzle piston 41 within the nozzle valve chamber 39.
9. Set control oil directional valve 101 to close position.
10. Increase control oil pressure up to 240 bar by control oil pressure control valve 108, where control oil pressure can be read on control oil pressure gauge 106. The control oil air driven pump 107 will start working and fill the hydraulic accumulator 105 with hydraulic oil.
11. Set quickly the control oil directional valve 101 to open position to initiate supply of control oil. The accumulated oil pressure in the hydraulic accumulator 105 will release with a high flow, which is higher than the pump 107 can deliver. The higher flow is needed for the proper operation of the injector valve 10. By supplying control oil at a first working test control oil pressure of 240 bar to the plunge oil inlet port 12a, the supplied control oil reaches the plunger piston 16 and also reaches via the control oil channel 30 the nozzle piston 41 at this first working test control oil pressure, which is equal to or higher than a predetermined working control oil pressure required for the plunger piston 16 to compress the hydraulic oil in the compression chamber 25 to deliver a pressure being above the pressure required for opening the suction valve 32, whereby the suction valve opens, said predetermined working control oil pressure also being high enough for the nozzle piston 41 to open the nozzle valve 38, whereby the nozzle valve 38 opens.
12. Check if compressed oil sprays out from the nozzle openings 46 into the spray chamber 5a.
13. Set the control oil directional valve 101 to close position.
14. Turn counter-clockwise the pressure control valves 108, 115 and 120.
15. Open pressure relief valves 102, 114 and 119 to release control oil, sealing oil and fuel oil pressure.

If hydraulic oil sprays out from the nozzle openings 46 into the spray chamber at step 12, then the valves 18, 32, 38 of the complete injector valve 10 are open as supposed to in normal operation mode.

The working test may further include a sealing test of the nozzle valve 38:
16. Close pressure relief valves 102, 114 and 1196, 7 and 8 fig. 18
17. Increase fuel oil pressure up to 50 bar by fuel oil pressure control 120, where pressure can be read on fuel oil pressure gauge 122.
18. Increase sealing oil pressure up to 80 bar by sealing oil pressure control valve 115, where sealing oil pressure can be read on sealing oil pressure gauge 117.
19. Increase control oil pressure up to 150 bar by control oil pressure control valve 108, where control oil pressure can be read on control oil pressure gauge 106. The control oil air driven pump 107 will start working and fill the hydraulic accumulator 105 with hydraulic oil.
20. Set quickly the control oil directional valve 101 to open position to initiate supply of control oil. The accumulated oil pressure in the hydraulic accumulator 105 will release with a high flow, which is higher than the pump 107 can deliver. By supplying control oil at a second working test control oil pressure of 150 bar to the plunge oil inlet port 12a, the supplied control oil reaches the plunger piston 16 and also reaches via the control oil channel 30 the nozzle piston 41 at this second working test control oil pressure, which is high enough for the plunger piston 16 to compress the hydraulic oil in the compression chamber 25 to deliver a pressure being above the pressure required for opening the suction valve 32, whereby the suction valve opens, while this second working test control oil pressure is below the pressure required to open the nozzle valve 38, whereby the nozzle valve 38 remains closed.
21. Check if compressed oil sprays out from the nozzle openings 46 into the spray chamber 5a.
22. Set the control oil directional valve 101 to close position.
23. Turn counter-clockwise the pressure control valves 108, 115 and 120.
24. Open pressure relief valves 102, 114 and 119 to release control oil, sealing oil and fuel oil pressure.

If hydraulic oil sprays out from the nozzle openings 46 into the spray chamber 5a, then the nozzle valve 38 is not completely tight. If no hydraulic oil is observed, the nozzle valve 38 is tight.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality.

## Claims

1. A method of testing a valve body (22) of an injector valve (10) for a combustion engine, which valve body (22) holds
a plunger piston chamber (23) for forming a compression chamber (25), a suction valve (32) with a suction piston (35), one or more fuel fluid channels (37), a nozzle valve (38) with a nozzle piston (41), one or more nozzle openings (46), and a control oil channel (30), wherein the fuel fluid channels (37) provide a fluid connection from the plunger piston chamber (23) to the nozzle openings (46) when the suction valve (32) is open by a pressure on the suction piston (35) provided by a fluid pressure in the plunger piston chamber (23) and when the nozzle valve (38) is open by a pressure on the nozzle piston (41) provided by a control oil pressure supplied via the control oil channel (30); **characterized in that** the method comprises:
supplying control oil to the nozzle piston (41) via the control oil channel (30) at a first control oil pressure, said first control oil pressure being higher than or equal to a predetermined control oil opening pressure for which the nozzle valve (38) is configured to open;
supplying a test gas to the suction piston (35) via the plunger piston chamber (23) at a first test gas pressure being lower than a predetermined test gas opening pressure for which the suction valve (32) is configured to open; and
checking whether any of the supplied test gas is reaching out through the nozzle openings (46).

2. A method according to claim 1, wherein the valve body (22) is placed in a holder (1) and a flexible hose (5b) is connected to the nozzle openings (46) and further connected to a separate container (5c) with liquid, whereby any test gas reaching through the nozzle openings (46) into the flexible hose (5b) is observed as bubbles in the liquid of the container (5c).

3. A method according to claim 1 or 2, wherein the control oil is supplied at a first control oil pressure in the range of 280-320 bar, such as about 300 bar.

4. A method according to any one of the claims 1 to 3, wherein the test gas is supplied at a first test gas pressure below 30 bar.

5. A method according to any one of the claims 1 to 4, further comprising the step of:
supplying test gas to the suction piston (35) via the plunger piston chamber (23) at a second test gas pressure being above or equal to the predetermined test gas opening pressure required for opening the suction valve (32); and
checking the amount of test gas reaching out through the nozzle openings (46).

6. A method according to claim 5, wherein the test gas being supplied at the second test gas pressure is supplied at a pressure being above 30 bar, such as not below 40 bar, and not below 50 bar, such as about 100 bar.

7. A method according to any one of the claims 1 to 6, further comprising the step of:
avoiding supply of control oil or supplying control oil at a pressure being below the predetermined control oil opening pressure to ensure that the nozzle piston (41) is in a position in which the nozzle valve (38) is closed;
supplying test gas to the suction piston (35) via the plunger piston chamber (23) at a test gas pressure being above or equal to the predetermined test gas opening pressure required for opening the suction valve (32); and
checking whether any test gas is reaching out through the nozzle openings (46) or not.

8. A method according to claim 7, wherein the test gas being supplied at a pressure being above or equal to the predetermined test gas opening pressure required for opening the suction valve (32) is supplied at a pressure being above 30 bar, such as not below 40 bar, such as not below 50 bar, such as about 100 bar.

9. A method according to any one of the claims 1 to 8, wherein a connecting piece (6) is provided, said connecting piece (6) having a top part (7) with a first fluid inlet port (8a) and a second fluid inlet port (8b) and further having a dummy thrust piece (9a) holding a test fluid channel (9b) in fluid connection with the second fluid inlet port (8b), and wherein before the steps of supplying control oil and test gas, the method comprises
connecting the connecting piece (6) to the valve body (22) by inserting the dummy thrust piece (9a) into the plunger piston chamber (23) with the test fluid channel (9b) reaching through the plunger piston chamber (23) to the suction valve (32), and connecting the first fluid inlet port (8a) to the control oil channel (30); and wherein
the control oil is supplied to the first fluid inlet port (8a) to reach the nozzle piston (41) via the control oil channel (30), and the test gas is supplied to the second fluid inlet port (8b) and flowing through the test fluid channel (9b) within the plunger piston chamber (23) to reach the suction piston (41).

10. A method according to claim 9, wherein the injector valve (10) further comprises:
a top cover (11) with a control oil inlet port (13), a cover chamber (12b) in fluid connection with the control oil inlet port (13) via one more cover fluid channels (15a, 15b); and
a plunger piston (16) with a plunger chamber (17), a plunger valve (18) and one or more plunger fluid channels (21), said plunger piston (16) being controlled by control oil supplied to the cover chamber (12b) from the control oil inlet port (13); and wherein before the step of connecting the connecting piece (6) to the valve body (22), the top cover (11) and the plunger piston (16) are connected to the valve body (22), with
the valve body (22) holding the plunger piston chamber (23) forming a compression chamber (25) together with the plunger piston (16), which is inserted into the plunger piston chamber (23), said compression chamber (25) being in fluid connection with the plunger chamber (17) via the plunger fluid channels (21) when the plunger valve (18) is open, and with
the control oil channel (30) being in fluid connection with the control oil inlet port (13) via the cover chamber (12b) and the cover fluid channels (15a, 15b) for supply of control oil.

11. A method according to claim 10, wherein the top cover (11) further holds a sealing oil inlet port (14), and the valve body (22) holds a sealing oil channel (31) and a nozzle valve chamber (39) holding the nozzle piston (41), which sealing oil channel (31) is in fluid connection with the sealing oil inlet port (14), in fluid connection with the plunger piston chamber (23) for sealing the plunger piston (16), and in fluid connection with the nozzle valve chamber (39) for sealing the nozzle piston (41).

12. A method according to claim 10 or 11, wherein the valve body (22) further comprises:
a first fuel inlet port (26) in fluid connection with the plunger chamber (17) via a first fuel inlet channel (27a) whereby a pressure provided by a fluid supplied from the first fuel inlet port (26) to the plunger chamber (17) opens the plunger valve (18); and
a second fuel inlet port (28) in fluid connection with the compression chamber (25) via a second fuel inlet channel (29).

13. A method according to claim 9 and any one of the claims 10 to 12, wherein before the step of connecting the connecting piece (6) to the valve body (22), the top cover (11) and the plunger piston (16) are disconnected from the valve body (22).

14. A method according to any one of the claims 1 to 13, wherein the test gas is a non-burnable gas, such as Nitrogen.

## Patentansprüche

1. Verfahren zum Testen eines Ventilkörpers (22) eines Einspritzventils (10) für einen Verbrennungsmotor, wobei der Ventilkörper (22) Folgendes enthält:
eine Plungerkolbenkammer (23) zum Bilden einer Kompressionskammer (25), ein Saugventil (32) mit einem Saugkolben (35), einen oder mehrere Kraftstofffluidkanäle (37), ein Düsenventil (38) mit einem Düsenkolben (41), eine oder mehrere Düsenöffnungen (46) und einen Steuerölkanal (30), wobei die Kraftstofffluidkanäle (37) eine Fluidverbindung von der Plungerkolbenkammer (23) zu den Düsenöffnungen (46) bereitstellt, wenn das Saugventil (32) durch einen Druck auf den Saugkolben (35), der durch einen Fluiddruck in der Plungerkolbenkammer (23) bereitgestellt wird, geöffnet ist, und wenn das Düsenventil (38) durch einen Druck auf den Düsenkolben (41), der durch einen über den Steuerölkanal (30) zugeführten Steueröldruck bereitgestellt wird, geöffnet ist; **dadurch gekennzeichnet, dass** das Verfahren umfasst:
Zuführen von Steueröl zum Düsenkolben (41) über den Steuerölkanal (30) bei einem ersten Steueröldruck, wobei der erste Steueröldruck höher oder gleich einem vorbestimmten Steuerölöffnungsdruck ist, für den das Düsenventil (38) zum Öffnen konfiguriert ist;
Zuführen eines Testgases zu dem Saugkolben (35) über die Plungerkolbenkammer (23) bei einem ersten Testgasdruck, der niedriger ist als ein vorbestimmter Testgasöffnungsdruck, für den das Saugventil (32) zum Öffnen konfiguriert ist; und
überprüfen, ob eines der zugeführten Testgase durch die Düsenöffnungen (46) nach außen gelangt.

2. Verfahren nach Anspruch 1, wobei der Ventilkörper (22) in einem Halter (1) angeordnet ist und ein flexibler Schlauch (5b) mit den Düsenöffnungen (46) verbunden ist und ferner mit einem separaten Behälter (5c) mit Flüssigkeit verbunden ist, wodurch jegliches Testgas, das durch die Düsenöffnungen (46) in den flexiblen Schlauch (5b) gelangt, als Blasen in der Flüssigkeit des Behälters (5c) beobachtet wird.

3. Verfahren nach Anspruch 1 oder 2, wobei das Steueröl mit einem ersten Steueröldruck im Bereich von 280 bis 320 bar, beispielsweise etwa 300 bar, zugeführt wird.

4. Verfahren nach einem der Ansprüche 1 bis 3, wobei das Testgas mit einem ersten Testgasdruck unter 30 bar zugeführt wird.

5. Verfahren nach einem der Ansprüche 1 bis 4, ferner umfassend den folgenden Schritt:
Zuführen von Testgas zu dem Saugkolben (35) über die Plungerkolbenkammer (23) bei einem zweiten Testgasdruck, der über oder gleich dem vorbestimmten Testgasöffnungsdruck ist, der zum Öffnen des Saugventils (32) erforderlich ist; und
Überprüfen der Menge an Testgas, die durch die Düsenöffnungen (46) austritt.

6. Verfahren nach Anspruch 5, wobei das Testgas, das mit dem zweiten Testgasdruck zugeführt wird, mit einem Druck zugeführt wird, der über 30 bar liegt, wie z. B. nicht unter 40 bar und nicht unter 50 bar, wie z. B. etwa 100 bar.

7. Verfahren nach einem der Ansprüche 1 bis 6, ferner umfassend den folgenden Schritt:
die Zufuhr von Steueröl zu vermeiden oder Steueröl mit einem Druck zuzuführen, der unter dem vorbestimmten SteuerölÖffnungsdruck liegt, um sicherzustellen, dass sich der Düsenkolben (41) in einer Position befindet, in der das Düsenventil (38) geschlossen ist;
dem Saugkolben (35) über die Plungerkolbenkammer (23) Testgas mit einem Testgasdruck zuzuführen, der über oder gleich dem vorbestimmten Testgas-Öffnungsdruck ist, der zum Öffnen des Saugventils (32) erforderlich ist; und
überprüfen, ob Testgas durch die Düsenöffnungen (46) nach außen gelangt oder nicht.

8. Verfahren nach Anspruch 7, wobei das Testgas, das mit einem Druck zugeführt wird, der über dem vorbestimmten Testgas-Öffnungsdruck liegt, der zum Öffnen des Saugventils (32) erforderlich ist, mit einem Druck zugeführt wird, der über 30 bar liegt, beispielsweise nicht unter 40 bar, beispielsweise nicht unter 50 bar, beispielsweise bei etwa 100 bar.

9. Verfahren gemäß einem der Ansprüche 1 bis 8, wobei ein Verbindungsstück (6) vorgesehen ist, wobei das Verbindungsstück (6) einen oberen Teil (7) mit einer ersten Fluideinlassöffnung (8a) und einer zweiten Fluideinlassöffnung (8b) aufweist und ferner ein Blinddruckstück (9a) aufweist, das einen Testfluidkanal (9b) in Fluidverbindung mit der zweiten Fluideinlassöffnung (8b) hält, und wobei vor den Schritten des Zuführens von Steueröl und Testgas das Verfahren umfasst
Verbinden des Verbindungsstücks (6) mit dem Ventilkörper (22) durch Einsetzen des Blinddruckstücks (9a) in die Plungerkolbenkammer (23), wobei der Testfluidkanal (9b) durch die Plungerkolbenkammer (23) zum Saugventil (32) reicht, und Verbinden des ersten Fluideinlassanschlusses (8a) mit dem Steuerölkanal (30); und wobei das Steueröl der ersten Fluideinlassöffnung (8a) zugeführt wird, um über den Steuerölkanal (30) den Düsenkolben (41) zu erreichen, und das Testgas der zweiten Fluideinlassöffnung (8b) zugeführt wird und durch den Testfluidkanal (9b) innerhalb der Plungerkolbenkammer (23) fließt, um den Saugkolben (41) zu erreichen.

10. Verfahren nach Anspruch 9, wobei das Einspritzventil (10) ferner umfasst:
einer oberen Abdeckung (11) mit einer Steueröleinlassöffnung (13), einer Abdeckungskammer (12b) in Fluidverbindung mit der Steueröleinlassöffnung (13) über einen oder mehrere Abdeckungsfluidkanäle (15a, 15b); und
einen Plungerkolben (16) mit einer Plungerkolbenkammer (17), einem Plungerkolbenventil (18) und einem oder mehreren Plungerkolben-Fluidkanälen (21), wobei der Plungerkolben (16) durch Steueröl gesteuert wird, das der Abdeckungskammer (12b); von der Steueröleinlassöffnung (13) zugeführt wird;
und wobei vor dem Schritt des Verbindens des Verbindungsstücks (6) mit dem Ventilkörper (22) die obere Abdeckung (11) und der Kolbenkolben (16) mit dem Ventilkörper (22) verbunden werden, mit
dem Ventilkörper (22), der die Plungerkolbenkammer (23) hält, die zusammen mit dem Plungerkolben (16), der in die Plungerkolbenkammer (23) eingesetzt ist, eine Kompressionskammer (25) bildet, wobei die Kompressionskammer (25) über die Plungerfluidkanäle (21) in Fluidverbindung mit der Plungerkammer (17) steht, wenn das Plungerventil (18) geöffnet ist, und mit
dem Steuerölkanal (30), der über die Abdeckungskammer (12b) und die Abdeckungsfluidkanäle (15a, 15b) in Fluidverbindung mit dem Steueröleinlassanschluss (13) steht, um Steueröl zuzuführen.

11. Verfahren nach Anspruch 10, wobei die obere Abdeckung (11) ferner eine Dichtöleinlassöffnung (14) aufweist und der Ventilkörper (22) einen Dichtölkanal (31) und eine Düsenventilkammer (39) aufweist, die den Düsenkolben (41) hält, wobei der Dichtölkanal (31) in Fluidverbindung mit dem Fluideinlassanschluss (14), in Fluidverbindung mit der Plungerkolbenkammer (23) zum Abdichten des Plungerkolbens (16) und in Fluidverbindung mit der Düsenventilkammer (39) zum Abdichten des Düsenkolbens (41) steht.

12. Verfahren nach Anspruch 10 oder 11, wobei der Ventilkörper (22) ferner umfasst:
einen ersten Fluideinlassanschluss (26), der über einen ersten Fluideinlasskanal (27a) in Fluidverbindung mit der Kolbenkammer (17) steht, wodurch ein Druck, der durch ein Fluid bereitgestellt wird, die von dem ersten Fluidseinlassanschluss (26) zu der Kolbenkammer (17) zugeführt wird, das Kolbenventil (18) öffnet; und
eine zweite Fluideinlassöffnung (28) in Fluidverbindung mit der Kompressionskammer (25) über einen zweiten Fluideinlasskanal (29).

13. Verfahren nach Anspruch 9 und einem der Ansprüche 10 bis 12, wobei vor dem Schritt des Verbindens des Verbindungsstücks (6) mit dem Ventilkörper (22) die obere Abdeckung (11) und der Plungerkolben (16) von dem Ventilkörper (22) getrennt werden.

14. Verfahren nach einem der Ansprüche 1 bis 13, wobei das Testgas ein nicht brennbares Gas ist, wie z. B. Stickstoff.

## Revendications

1. Procédé d'essai d'un corps de soupape (22) d'une soupape d'injecteur (10) pour un moteur à combustion, dont le corps de soupape (22) maintient
une chambre de piston plongeur (23) pour former une chambre de compression (25), une soupape d'aspiration (32) avec un piston d'aspiration (35), un ou plusieurs canaux de fluide de carburant (37), une soupape de buse (38) avec un piston de buse (41), une ou plusieurs ouvertures de buse (46) et un canal d'huile de commande (30), dans lequel les canaux de fluide de carburant (37) fournissent une connexion fluidique de la chambre de piston plongeur (23) aux ouvertures de buse (46) lorsque la soupape d'aspiration (32) est ouverte par une pression sur le piston d'aspiration (35) fournie par une pression de fluide dans la chambre de piston plongeur (23) et lorsque la soupape de buse (38) est ouverte par une pression sur le piston de buse (41) fournie par une pression d'huile de commande fournie via le canal d'huile de commande (30) ; **caractérisé en ce que** le procédé consiste à :
fournir de l'huile de commande au piston de buse (41) par l'intermédiaire du canal d'huile de commande (30) à une première pression d'huile de commande, ladite première pression d'huile de commande étant supérieure ou égale à une pression d'ouverture d'huile de commande prédéterminée pour laquelle la soupape de buse (38) est configurée pour s'ouvrir ;
fournir un gaz d'essai au piston d'aspiration (35) par l'intermédiaire de la chambre de piston plongeur (23) à une première pression de gaz d'essai étant inférieure à une pression d'ouverture de gaz d'essai prédéterminée pour laquelle la soupape d'aspiration (32) est configurée pour s'ouvrir ; et
vérifier si une partie du gaz d'essai fourni sort par les ouvertures de buse (46).

2. Procédé selon la revendication 1, dans lequel le corps de soupape (22) est placé dans un support (1) et un tuyau flexible (5b) est relié aux ouvertures de buse (46) et relié en outre à un récipient séparé (5c) avec du liquide, de sorte que toute partie du gaz d'essai atteignant à travers les ouvertures de buse (46) le tuyau flexible (5b) soit observée comme des bulles dans le liquide du récipient (5c).

3. Procédé selon la revendication 1 ou 2, dans lequel l'huile de commande est fournie à une première pression d'huile de commande dans la plage de 280-320 bars, telle qu'environ 300 bars.

4. Procédé selon l'une quelconque des revendications 1 à 3, dans lequel le gaz d'essai est fourni à une première pression de gaz d'essai inférieure à 30 bars.

5. Procédé selon l'une quelconque des revendications 1 à 4, comprenant en outre les étapes consistant à :
fournir du gaz d'essai au piston d'aspiration (35) par l'intermédiaire de la chambre de piston plongeur (23) à une seconde pression de gaz d'essai étant supérieure ou égale à la pression d'ouverture de gaz d'essai prédéterminée requise pour ouvrir la soupape d'aspiration (32) ; et
vérifier la quantité de gaz d'essai sortant par les ouvertures de buse (46).

6. Procédé selon la revendication 5, dans lequel le gaz d'essai étant fourni à la seconde pression de gaz d'essai est fourni à une pression étant supérieure à 30 bars, telle que non inférieure à 40 bars, et non inférieure à 50 bars, telle qu'environ 100 bars.

7. Procédé selon l'une quelconque des revendications 1 à 6, comprenant en outre les étapes consistant à :
éviter la fourniture d'huile de commande ou fournir de l'huile de commande à une pression étant inférieure à la pression d'ouverture d'huile de commande prédéterminée pour s'assurer que le piston de buse (41) est dans une position dans laquelle la soupape de buse (38) est fermée ;
fournir du gaz d'essai au piston d'aspiration (35) par l'intermédiaire de la chambre de piston plongeur (23) à une pression de gaz d'essai étant supérieure ou égale à la pression d'ouverture de gaz d'essai prédéterminée requise pour ouvrir la soupape d'aspiration (32) ; et
vérifier si une partie du gaz d'essai sort par les ouvertures de buse (46) ou non.

8. Procédé selon la revendication 7, dans lequel le gaz d'essai étant fourni à une pression supérieure ou égale à la pression d'ouverture de gaz d'essai prédéterminée requise pour ouvrir la soupape d'aspiration (32) est fourni à une pression supérieure à 30 bars, telle que non inférieure à 40 bars, telle que non inférieure à 50 bars, telle qu'environ 100 bars.

9. Procédé selon l'une quelconque des revendications 1 à 8, dans lequel une pièce de connexion (6) est prévue, ladite pièce de connexion (6) ayant une partie supérieure (7) avec un premier orifice d'entrée de fluide (8a) et un second orifice d'entrée de fluide (8b) et ayant en outre une pièce de poussée factice (9a) maintenant un canal de fluide d'essai (9b) en connexion fluidique avec le second orifice d'entrée de fluide (8b), et dans lequel, avant les étapes de fourniture d'huile de commande et de gaz d'essai, le procédé consiste à
connecter la pièce de connexion (6) au corps de soupape (22) en insérant la pièce de poussée factice (9a) dans la chambre de piston plongeur (23) avec le canal de fluide d'essai (9b) atteignant à travers la chambre de piston plongeur (23) la soupape d'aspiration (32), et connecter le premier orifice d'entrée de fluide (8a) au canal d'huile de commande (30) ; et dans lequel
l'huile de commande est fournie au premier orifice d'entrée de fluide (8a) pour qu'elle atteigne le piston de buse (41) par l'intermédiaire du canal d'huile de commande (30), et le gaz d'essai est fourni au second orifice d'entrée de fluide (8b) et s'écoule à travers le canal de fluide d'essai (9b) à l'intérieur de la chambre de piston plongeur (23) pour atteindre le piston d'aspiration (41).

10. Procédé selon la revendication 9, dans lequel la soupape d'injecteur (10) comprend en outre :
un couvercle supérieur (11) avec un orifice d'entrée d'huile de commande (13), une chambre de couvercle (12b) en communication fluidique avec l'orifice d'entrée d'huile de commande (13) par l'intermédiaire d'un ou plusieurs canaux de fluide de couvercle (15a, 15b) ; et
un piston plongeur (16) avec une chambre de piston plongeur (17), une soupape à piston plongeur (18) et un ou plusieurs canaux de fluide de piston plongeur (21), ledit piston plongeur (16) étant commandé par l'huile de commande fournie à la chambre de couvercle (12b) à partir de l'orifice d'entrée d'huile de commande (13) ; et dans lequel, avant l'étape de connexion de la pièce de connexion (6) au corps de soupape (22), le couvercle supérieur (11) et le piston plongeur (16) sont reliés au corps de soupape (22), avec le corps de soupape (22) maintenant la chambre de piston plongeur (23) formant une chambre de compression (25) avec le piston plongeur (16), qui est inséré dans la chambre de piston plongeur (23), ladite chambre de compression (25) étant en communication fluidique avec la chambre de piston plongeur (17) par l'intermédiaire des canaux de fluide de piston plongeur (21) lorsque la soupape à piston plongeur (18) est ouverte, et avec
le canal d'huile de commande (30) étant en communication fluidique avec l'orifice d'entrée d'huile de commande (13) par l'intermédiaire de la chambre de couvercle (12b) et des canaux de fluide de couvercle (15a, 15b) pour la fourniture d'huile de commande.

11. Procédé selon la revendication 10, dans lequel le couvercle supérieur (11) maintient en outre un orifice d'entrée d'huile d'étanchéité (14), et le corps de soupape (22) maintient un canal d'huile d'étanchéité (31) et une chambre de soupape de buse (39) maintenant le piston de buse (41), canal d'huile d'étanchéité (31) qui est en communication fluidique avec l'orifice d'entrée d'huile d'étanchéité (14), en communication fluidique avec la chambre de piston de plongeur (23) pour sceller le piston plongeur (16), et en communication fluidique avec la chambre de soupape de buse (39) pour sceller le piston de buse (41).

12. Procédé selon la revendication 10 ou 11, dans lequel le corps de soupape (22) comprend en outre :
un premier orifice d'entrée de carburant (26) en communication fluidique avec la chambre de piston plongeur (17) par l'intermédiaire d'un premier canal d'entrée de carburant (27a) grâce auquel une pression fournie par un fluide fourni à partir du premier orifice d'entrée de carburant (26) à la chambre de piston plongeur (17) ouvre la soupape à piston plongeur (18) ; et
un second orifice d'entrée de carburant (28) en communication fluidique avec la chambre de compression (25) par l'intermédiaire d'un second canal d'entrée de carburant (29).

13. Procédé selon la revendication 9 et l'une quelconque des revendications 10 à 12, dans lequel, avant l'étape de connexion de la pièce de connexion (6) au corps de soupape (22), le couvercle supérieur (11) et le piston plongeur (16) sont déconnectés du corps de soupape (22).

14. Procédé selon l'une quelconque des revendications 1 à 13, dans lequel le gaz d'essai est un gaz non-inflammable, comme l'azote.
